# EUROPEAN PATENT SPECIFICATION

(11) **EP 0 940 859 B1**
(45) Date of publication and mention of the grant of the patent: **26.05.2004**
(21) Application number: 99300955.4
(22) Date of filing: 10.02.1999
(51) Int. Cl.: H01L 31/052, H01L 31/058

(54) **Combined solar collector and photovoltaic cells**
Kombination von Sonnenkollektor und photovoltaischen Zellen
Combinaison d'un capteur solaire et de cellules photovoltaiques

(30) Priority: 25.02.1998 CA 2230471
(43) Date of publication of application: 08.09.1999
(73) Proprietor: Hollick, John C., Maple, Ontario L6A 1G2 (CA)
(72) Inventor: Hollick, John C., Maple, Ontario L6A 1G2 (CA)
(74) Representative: Calderbank, Thomas Roger

(56) References cited:
- EP-A- 0 340 886
- EP-A- 0 380 349
- EP-A- 0 553 893
- US-A- 4 095 997
- HOLLICK J C: "World's largest and tallest solar recladding" RENEWABLE ENERGY,GB,PERGAMON PRESS, OXFORD, vol. 9, no. 1, 12 September 1996 (1996-09-12), pages 703-707, XP004048773 ISSN: 0960-1481
- TAKASHIMA T ET AL: "NEW PROPOSAL FOR PHOTOVOLTAIC-THERMAL SOLAR ENERGY UTILIZATION METHOD" SOLAR ENERGY,GB,PERGAMON PRESS. OXFORD, vol. 52, no. 3, 1 March 1994 (1994-03-01), pages 241-245, XP000434856 ISSN: 0038-092X
- HOLLICK J C: "Solar cogeneration panels" RENEWABLE ENERGY,GB,PERGAMON PRESS, OXFORD, vol. 15, no. 1-4, 12 September 1998 (1998-09-12), pages 195-200, XP004137999 ISSN: 0960-1481

## Description

This invention relates generally to the combination of a solar collector and photovoltaic cells, and has to do particularly with an arrangement by which overheating of the photovoltaic cells is avoided.

Photovoltaic panels are generally only 5% to 15% efficient in converting sunlight into electrical energy. Much of the remaining energy is lost as thermoenergy.

It is already known to combine photovoltaic cells with solar collectors, in order that the sun's energy can be tapped for both heat and electrical energy. The photovoltaic cells are typically secured directly against appropriately sized flat portions of the corrugations, and are held in place by conventional fastening means. In the event of a particularly hot run of weather, with ambient temperatures of 30° C or even greater, the heat energy collected by the solar collector panel can result in damage to the photovoltaic cells, eventually requiring that such cells be replaced.

In an article entitled "The World's Largest And Tallest Solar Recladding" by 'the inventor of the present application, published in Renewable Energy Vol. 9 No. 1, pages 703 - 707 of 12 September 1996, there is disclosed a solar air heating system known as SOLARWALL, in which a corrugated panel is mounted on a building. The panel has apertures therein, and air is drawn through the apertures and through the air gap between the panel and the building, to provide a source of heated air.

US-A-4095997 discloses a solar cell apparatus in which solar cells are mounted in a box and air is drawn through the box from an inlet to an outlet, the air being heated by the cells. The box contains a plate with aperture therein.

The present invention addresses this problem of overheating photovoltaic cells associated with a solar collector panel.

More specifically, this invention provides, an arrangement comprising:
a generally corrugated solar collector panel adapted to be secured to a building surface in spaced relation thereto, to define therewith an enclosed space,
a substantially flat surface defined by each of at least some of the panel corrugations, each substantially flat surface being configured and located such that it faces in the general direction of the sun during at least a portion of the daylight hours,
at least part of the panel having a plurality of generally uniformly distributed apertures, said at least part of the panel including at least a portion of said flat surfaces of the corrugations
a plurality of substantially flat photovoltaic cells,
and mounting means securing the photovoltaic cells to the corrugations at said flat surfaces where the latter contain said apertures, said photovoltaic cells being supported parallel with and adjacent to but spaced apart from said flat surfaces, thus leaving air passages between the photovoltaic cells and the collector panel whereby air can enter and leave said enclosed space by flowing through said air passages and along the undersides of the photovoltaic cells, thus removing excess heat build-up from the photovoltaic cells.

Further, this invention provides an arrangement comprising a building which defines a surface that generally faces in the direction of the sun during at least part of the daylight hours, with a generally corrugated solar collector panel secured to said surface in spaced relation thereto, to define therewith an enclosed space; a substantially flat surface defined by each of at least some of the panel corrugations, each substantially flat surface being configured and located such that it faces in the general direction of the sun during at least a portion of the daylight hours; at least part of the panel having a plurality of generally uniformly distributed apertures, said at least part of the panel including at least a portion of said flat surfaces of the corrugations; a plurality of substantially flat photovoltaic cells; and mounting means securing the photovoltaic cells to the corrugations at said flat surfaces where the latter contain said apertures, said photovoltaic cells being supported parallel with and adjacent to but spaced apart from said flat surfaces, thus leaving an air passage between each photovoltaic cell and the adjacent part of the collector panel whereby air can enter and leave said enclosed space by flowing through said air passage and along the underside of the photovoltaic cell, thus removing excess heat build-up from the photovoltaic cell.

Three embodiments of this invention are illustrated in the accompanying drawings, in which like numerals denote like parts throughout the several views, and in which:
Figure 1 is a perspective view of a first embodiment of a solar heat absorbing panel mounted on a roof;
Figure 2 is a sectional view through the structure of Figure 1, taken on a plane which is perpendicular to the trapezoidal channels of the heat absorbing panel, and also perpendicular to the sloping other flat surface of the panel, showing a mounting possibility for the photovoltaic cells;
Figure 3 is a perspective view of a second embodiment of a corrugated solar heat absorbing panel showing its combination with photovoltaic panels; and
Figure 4 is a sectional view taken perpendicular to the general direction of the corrugations, showing a further embodiment.

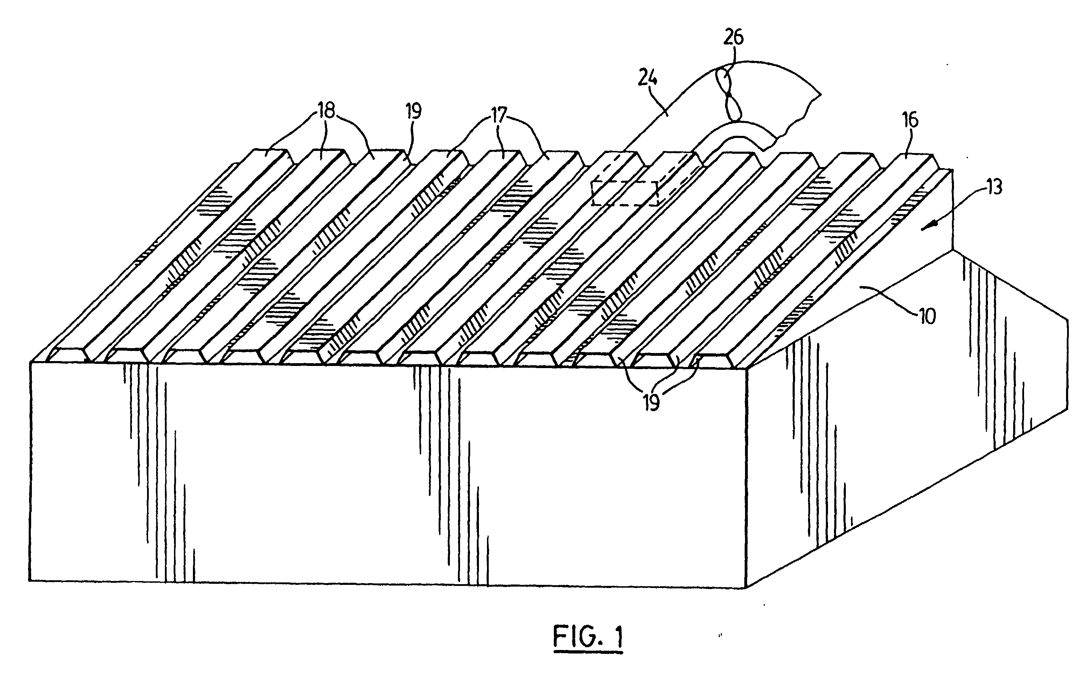

Figure 1 shows a partly broken-away perspective view of a system for carrying out the present invention. A building roof 10 is shown, this being typically of corrugated metal or tile construction, resting on transverse roof support members which are not illustrated. As with all building roofs and walls which are not insulated, a steady transfer of heat is experienced through the material when there is a temperature differential between the two sides. In the embodiment illustrated, a heat absorbing panel 16 is mounted to the roof 10 in spaced relation thereto, thus defining an enclosed, air-collecting space 13.

It will be noted that the heat absorbing panel 16 includes a plurality of trapezoidal corrugations 17, each having a flat outer wall 18 and two sloping side walls 19, along with flat gutter walls 19a.

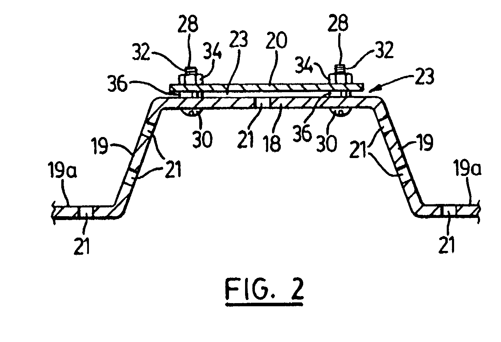

In the embodiment illustrated, the entire panel 16 has a plurality of generally uniformly distributed apertures 21 (seen only in Figure 2).

The combination further includes a plurality of photovoltaic cells 20 which (in the embodiment illustrated) are secured by suitable mounting means to the flat outer wall 18 of each corrugation, positioned to be adjacent a portion of the wall 18 which contains the above-mentioned apertures 21. More specifically, the photovoltaic cells 20 are supported to lie parallel with and adjacent to the corresponding corrugation wall 18, but spaced apart from the wall 18 in such a way as to leave an air passage 23 between the photovoltaic cell 20 and the adjacent portion of the solar collector, such that air can enter and leave the enclosed space 13 (Figure 1) by flowing through the air passage 23 and along the underside of the photovoltaic cell 20, thus removing excess heat build-up from the photovoltaic cell 20.

Figure 2 shows only a single aperture 21 in the outer wall 18 adjacent the photovoltaic cell 20, it being understood that there is only a single aperture 21 in that region at the particular position of the cross-sectional plane. In actuality, there would be a number of generally distributed apertures 21 in the outer wall 18 of the corrugation, but a single cross-sectional view cannot intercept all such apertures.

Returning to Figure 1, an air duct 24 is illustrated schematically, representing a passageway through which air can be extracted from the air-collecting space 13. If required, a fan 26 can be located in the duct 24.

Returning to Figure 2, it can be seen that the photovoltaic cell 20 is supported in a position spaced away from the outside wall 18 by spacer bolts 28, each of which includes a head 30, a shank 32, a self-locking nut 34, and a washer-like spacer 36 lying between the photovoltaic cell 20 and the wall 18. Of course, the person skilled in the art could devise other mounting means capable of holding the photovoltaic cell in spaced relation to the wall 18.

The calculation of the number and spacing of the perforations 21 is based on the volume of air required during the heating season. If heating is not required, then the calculation of the number and spacing of the holes is based on the thermodynamic principles which allow hot air to rise.

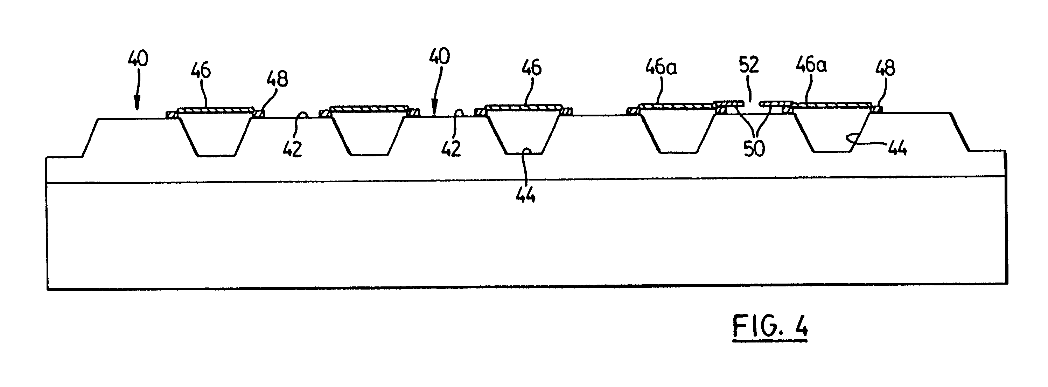

Attention is now directed to Figure 4, which illustrates a sectional view taken perpendicularly with respect to the general elongation of the corrugations 40. The corrugations 40 consist of flat surfaces 42 which alternate with recessed portions 44, the flat surfaces 40 and recesses 44 defining a plurality of side-by-side trapezoidal configurations. It will be noted in particular that the flat surfaces 40 are all in planar alignment (coplanar).

As with the embodiments described earlier, the solar collector panel consisting of the surfaces 42 and the recesses 44 has a plurality of generally uniformly distributed apertures (not seen in Figure 4), covering at least part of the panel.

As further seen in Figure 4, PV cells 46 are sized to cover the recesses 44, and thus are relatively long and narrow panels. Spacers 48 are provided to mount the PV cells 46 in spaced position above the recesses 44.

As shown at the right of Figure 4, PV cells 46a may be made wider than the recesses 44, such that marginal portions 50 of the cells 46 project toward each other in spaced alignment above the surfaces 42, in such a way as to leave a small gap 52 between them. It is contemplated that the embodiment seen in Figure 4 will be suitable where it is desired to efficiently provide electrical wiring to connect the PV cells. Such wiring can lie within an "electrical conduit" defined by the recesses 44 and covered by the PV cells 46.

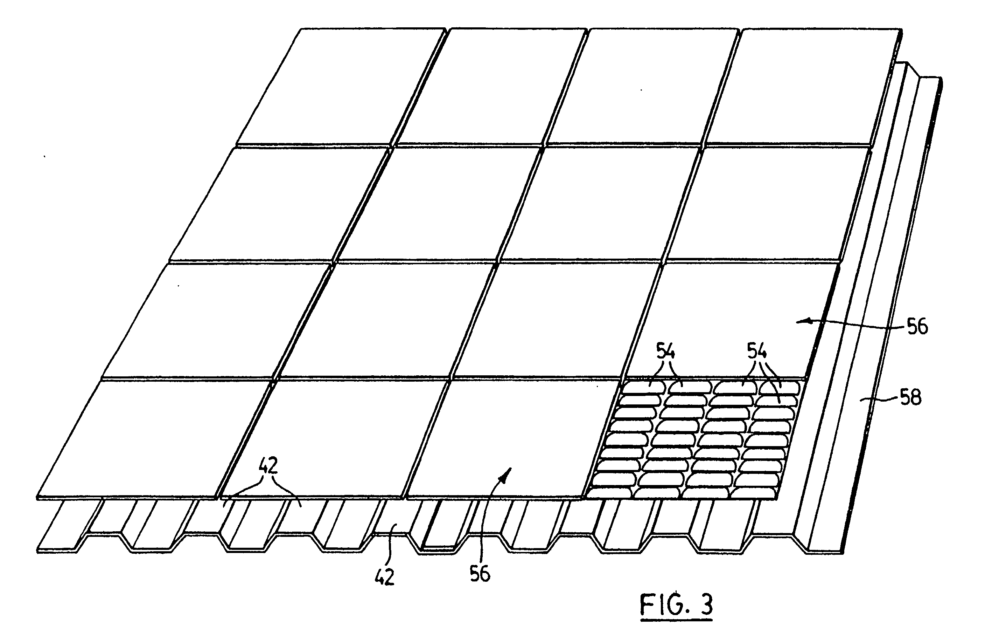

In Figure 3, several PV cells 54 are combined into a single PV panel 56 sized to span several adjacent flat surfaces 42 and several recesses 44. Again, the corrugated panel 58 is perforated and the PV panels 56 are spaced above the surfaces 42 to allow cooling air to pass below the panels 56 and through the apertures.

While several embodiments of this invention have been illustrated in the accompanying drawings and described hereinabove, those skilled in the art will appreciate that changes and modifications may be made therein without departing from the essence of this invention, as set forth in the appended claims.

## Claims

1. An arrangement comprising:
a generally corrugated solar collector panel (16) adapted to be secured to a building surface in spaced relation thereto, to define therewith an enclosed space (13),
a substantially flat surface (18) defined by each of at least some of the panel corrugations, each substantially flat surface being configured and located such that it faces in the general direction of the sun during at least a portion of the daylight hours,
at least part of the panel having a plurality of generally uniformly distributed apertures (21), said at least part of the panel including at least a portion of said flat surfaces of the corrugations,
a plurality of substantially flat photovoltaic cells (20),
and mounting means securing the photovoltaic cells to the corrugations at said flat surfaces (18) where the latter contain said apertures (21), said photovoltaic cells being supported parallel with and adjacent to but spaced apart from said flat surfaces, thus leaving air passages between the photovoltaic cells and the collector panel whereby air can enter and leave said enclosed space by flowing through said air passages and along the undersides of the photovoltaic cells, thus removing excess heat build-up from the photovoltaic cells.

2. An arrangement according to claim 1, in which the corrugations of the collector panel are substantially trapezoidal when seen in section.

3. An arrangement according to claim 1 or claim 2, in which the apertures are distributed over substantially the entire surface of the solar collector panel.

4. An arrangment comprising a building which defines a surface that generally faces in the direction of the sun during at least part of the daylight hours, with a generally corrugated solar collector panel (16) secured to said surface in spaced relation thereto, to define therewith an enclosed space (13); a substantially flat surface (18) defined by each of at least some of the panel corrugations, each substantially flat surface being configured and located such that it faces in the general direction of the sun during at least a portion of the daylight hours; at least part of the panel having a plurality of generally uniformly distributed apertures (21), said at least part of the panel including at least a portion of said flat surfaces of the corrugations; a plurality of substantially flat photovoltaic cells (20); and mounting means securing the photovoltaic cells to the corrugations at said flat surfaces (18) where the latter contain said apertures (21), said photovoltaic cells being supported parallel with and adjacent to but spaced apart from said flat surfaces, thus leaving an air passage between each photovoltaic cell and the adjacent part of the collector panel whereby air can enter and leave said enclosed space by flowing through said air passage and along the underside of the photovoltaic cell, thus removing excess heat build-up from the photovoltaic cells.

5. An arrangement according to claim 4, in which the corrugations of the collector panel are substantially trapezoidal when seen in section.

6. An arrangement according to claim 4 or claim 5, in which the said apertures are distributed over substantially the entire surface of the solar collector panel.

7. An arrangment according to any one of claims 4 to 6, further including air-moving means operatively associated with said enclosed space, by which air can be positively urged to move through said apertures.

8. An arrangement according to any one of the preceding claims, in which said flat surfaces defined by panel corrugations are substantially in planar alignment and alternate with recessed portions of the corrugations, said photovoltaic cells being incorporated into photovoltaic panels which overlie at least part of said flat surfaces and which span at least part of said recessed portions.

## Patentansprüche

1. Anordnung umfassend:
eine im Allgemeinen gerippte Sonnenkollektorplatte (16), die so ausgebildet ist, dass sie an einer Gebäudeoberfläche von dieser beabstandet befestigt werden kann, um mit dieser einen abgeschlossenen Raum (13) zu definieren,
eine im Wesentlichen flache Oberfläche (18), die von jeder von zumindest einigen Plattenrippen definiert ist, wobei jede im Wesentlichen flache Oberfläche so konfiguriert und angeordnet ist, dass sie während zumindest einem Teil der Tageslichtstunden in die allgemeine Richtung der Sonne gerichtet ist,
zumindest einen Teil der Platte mit einer Vielzahl von im Allgemeinen einheitlich verteilten Öffnungen (21), wobei zumindest ein Teil der Platte zumindest einen Abschnitt der flachen Oberflächen der Rippen einschließt,
eine Vielzahl im Wesentlichen flacher photovoltaischer Zellen (20),
und Montagemittel, um die photovoltaischen Zellen an den flachen Oberflächen (18), wo Letztere die Öffnungen (21) enthalten, an den Rippen zu befestigen, wobei die photovoltaischen Zellen parallel zu den und an die flachen Oberflächen angrenzend jedoch von diesen beabstandet getragen werden, wodurch Luftdurchlässe zwischen den photovoltaischen Zellen und der Kollektorplatte freigelassen werden, wodurch Luft in den geschlossenen Raum eintreten kann und diesen wieder verlassen kann, indem sie durch die Luftdurchlässe und entlang der Unterseiten der photovoltaischen Zellen strömt, um einen Überschuß-Wärmestau von den photovoltaischen Zellen zu beseitigen.

2. Anordnung nach Anspruch 1, worin die Rippen der Kollektorplatte im Querschnitt betrachtet im Wesentlichen trapezförmig sind.

3. Anordnung nach Anspruch 1 oder 2, worin die Öffnungen über im Wesentlichen die gesamte Oberfläche der Sonnenkollektorplatte verteilt sind.

4. Anordnung umfassend ein Gebäude, das eine Oberfläche definiert, die zumindest während einem Teil der Sonnenlichtstunden im Allgemeinen in die Richtung der Sonne gerichtet ist, wobei eine im Allgemeinen gerippte Sonnenkollektorplatte (16) an der Oberfläche und zu dieser beabstandet befestigt ist, um mit dieser einen geschlossenen Raum (13) zu definieren; eine im Wesentlichen flache Oberfläche (18), die von jeder von zumindest einigen Plattenrippen definiert ist, wobei jede im Wesentlichen flache Oberfläche so konfiguriert und angeordnet ist, dass diese während zumindest einem Teil der Tageslichtstunden in die allgemeine Richtung der Sonne ausgerichtet ist; zumindest einen Teil der Platte mit einer Vielzahl von im Allgemeinen einheitlich verteilten Öffnungen (21), wobei zumindest ein Teil der Platte zumindest einen Abschnitt der flachen Rippenoberflächen einschließt; eine Vielzahl im Wesentlichen flacher photovoltaischer Zellen (20); und Montagemittel, um die photovoltaischen Zellen an den flachen Oberflächen, wo Letztere die Öffnungen (21) enthalten, an den Rippen zu befestigen, wobei die photovoltaischen Zellen parallel zu den und angrenzend an die flachen Oberflächen jedoch von diesen beabstandet getragen werden, wodurch ein Luftdurchlass zwischen jeder photovoltaischen Zelle und dem angrenzenden Teil der Kollektorplatte freigelassen wird, durch den Luft in den geschlossenen Raum eindringen und aus diesem austreten kann, indem sie durch den Luftdurchlass und entlang der Unterseite der photovoltaischen Zelle strömt, um dadurch einen Überschuß-Wärmestau von den photovoltaischen Zellen zu beseitigen.

5. Anordnung nach Anspruch 4, worin die Rippen der Kollektorplatte im Querschnitt betrachtet im Wesentlichen trapezförmig sind.

6. Anordnung nach Anspruch 4 oder 5, worin die Öffnungen im Wesentlichen über die gesamte Oberfläche der Sonnenkollektorplatte verteilt sind.

7. Anordnung nach einem der Ansprüche 4 bis 6 weiters einschließend Luftbewegungsmittel, die dem geschlossenen Raum operativ zugeordnet sind, wodurch Luft durch die Öffnungen zwangsbewegt werden kann.

8. Anordnung nach einem der vorhergehenden Ansprüche, worin die flachen Oberflächen, die durch die Plattenrippen definiert sind, im Wesentlichen planar ausgerichtet sind und sich mit vertieften Abschnitten der Rippen abwechseln, wobei die photovoltaischen Zellen in photovoltaische Platten integriert sind, die auf zumindest einem Teil der flachen Oberflächen liegen und zumindest einen Teil der vertieften Abschnitte überdecken.

## Revendications

1. Agencement comprenant :
un panneau formant capteur solaire généralement ondulé (16) conçu pour être fixé à une surface d'un bâtiment en une relation espacée à celle-ci, pour définir avec celle-ci un espace enfermé (13),
une surface sen siblement plate (18) définie par chacune d'au moins quelques-unes des ondulations du panneau, chaque surface sensiblement plate étant configurée et localisée de façon qu'elle soit orientée dans la direction générale du soleil pendant au moins une partie de s heures profitant de la lumière du jour,
au moins une partie du panneau comportant plusieurs ouvertures (21) distribuées généralement uniformément, ladite partie précitée du panneau comportant au moins une portion desdites surfaces plates des ondulations,
une pluralité de cellules photovoltaïques (20) sensiblement plates,
et des moyens de montage fixant les cellules photovoltaïques aux ondulations auxdites surfaces plates (18), où les dernières présentent lesdites ouvertures (21), lesdites cellules pho tovoltaïques étant supportées parallèlement et d'une manière adjacente à, mais espacées desdites surfaces plates, en laissant ainsi subsister des passages d'air entre les cellules photovoltaïques et le panneau formant capteur, par quoi l'air peut entrer dans ledit espace enfermé et sortir de celui-ci en s'écoulant à travers lesdits passages d'air et le long des côtés inférieurs des cellules photovoltaïques, en supprimant ainsi une montée de chaleur excessive des cellules photovoltaïques.

2. Agencement selon la revendication 1, dans lequel les ondulations du panneau formant collecteur sont sensiblement trapézoïdales vues en section.

3. Agencement selon la revendication 1 ou la revendication 2, où les ouvertures sont distribuées sur sensiblement toute la surf ace du panneau formant capteur solaire.

4. Agencement comprenant un bâtiment qui définit une surface qui est orientée généralement dans la direction du soleil pendant au moins une partie des heures profitant de la lumière du jour, avec un panneau (16) formant capteur solaire généralement ondulé fixé à ladite surface en une relation espacée à celle-ci pour définir avec celle-ci un espace enfermé (13), une surface sensiblement plate (18) définie par chacune d'au moins quelques-unes des ondulations du panneau , chaque surface sensiblement plate étant configurée et localisée de façon qu'elle soit orientée dans la direction générale du soleil pendant au moins une partie des heures profitant de la lumière du jour ; au moins une partie du panneau comportant plusieurs ouvertures (21) distribuées généralement uniformément, au moins une partie précitée du panneau comprenant au moins une portion desdites surfaces plates des ondulations ; une pluralité de cellules photovoltaïques (20) sensiblement plates ; et des moyens de montage fixant les cellules photovoltaïques aux ondulations auxdites surfaces plates (18), où les dernières présentent lesdites ouvertures (21), lesdites cellules photovoltaïques étant supportées parallèlement et d'une manière adjacente à, mais espacées desdites surfaces plates en laissant ainsi subsister un passage d'air entre chaque cellule photovoltaïque et la partie adjacente du panneau formant capteur par quoi l'air peut entrer dans ledit espace enfermé et sortir de celui-ci en s'écoulant à travers ledit passage d'air et le long du côté inférieur de la cellule photovoltaïque en supprimant ainsi une montée de chaleur excessive des cellules photovoltaïques.

5. Agencement selon la revendication 4, où les ondulations du panneau formant capteur sont sensiblement trapézoïdales en section.

6. Agencement selon la revendication 4 ou la revendication 5, où lesdites ouvertures sont distribuées sur sensiblement toute la surface du panneau formant capteur solaire.

7. Agencement selon l'une des revendications 4 à 6, comportant en outre un moyen déplaçant l'air fonctionnellement associé audit espace enfermé, par lequel l'air peut être sollicité d'une manière positive pour passer à travers lesdites ouvertures.

8. Agencement selon l'une des revendications précédentes, dans lequel lesdites surfaces plates définies par les ondulations du panneau se trouvent dans un alignement sensiblement plan et alternent avec des portions évidées des ondulations, lesdites cellules photovoltaïques étant incorporées dans les panneaux photovoltaïques qui reposent sur au moins une partie desdites surfaces plates et qui recouvrent au moins une partie desdites portions évidées.
